(19) **Europäisches Patentamt / European Patent Office / Office européen des brevets**

(11) **EP 4 133 669 B1**

(12) **EUROPEAN PATENT SPECIFICATION**

(45) Date of publication and mention of the grant of the patent:
**29.07.2026 Bulletin 2026/31**

(21) Application number: **21719981.9**

(22) Date of filing: **12.04.2021**

(51) International Patent Classification (IPC):
*H04L 5/00* (2006.01)   *H04W 36/06* (2009.01)
*H04W 56/00* (2009.01)   *H04W 74/08* (2024.01)

(52) Cooperative Patent Classification (CPC):
**H04L 5/0053; H04L 5/001**

(86) International application number:
**PCT/IB2021/053020**

(87) International publication number:
**WO 2021/205419 (14.10.2021 Gazette 2021/41)**

(54) **PROCESSING TIME FOR FAST-SWITCHED UL TX ACROSS CARRIERS**

VERARBEITUNGSZEIT FÜR SCHNELL VERMITTELTEN ULTX ÜBER TRÄGER

TEMPS DE TRAITEMENT POUR UNE TRANSMISSION EN LIAISON MONTANTE À COMMUTATION RAPIDE ENTRE PORTEUSES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.04.2020 US 202063008310 P**

(43) Date of publication of application:
**15.02.2023 Bulletin 2023/07**

(73) Proprietor: **Telefonaktiebolaget LM ERICSSON (PUBL)**
**16483 Stockholm (SE)**

(72) Inventors:
• **NIMBALKER, Ajit**
**Fremont, California 94538 (US)**
• **NORY, Ravikiran**
**San Jose, California 95134 (US)**

(74) Representative: **Ericsson**
**Patent Development**
**Torshamnsgatan 21-23**
**164 80 Stockholm (SE)**

(56) References cited:
**EP-A1- 3 454 611      WO-A1-2014/111161**
**CN-A- 110 234 136**

**Description**

<u>Related Applications</u>

This application claims the benefit of provisional patent application serial number 63/008,310, filed April 10, 2020.

<u>Technical Field</u>

The present disclosure relates to uplink transmission in a cellular communications system and, more specifically, to uplink transmission with Tx switching.

<u>Background</u>

The Third Generation Partnership Project (3GPP) New Radio (NR) standard provides service for multiple use cases such as enhanced Mobile Broadband (eMBB), Ultra-Reliable and Low Latency Communication (URLLC), and Machine Type Communication (MTC). Each of these services has different technical requirements. For example, the general requirement for eMBB is high data rate with moderate latency and moderate coverage, while URLLC service requires a low latency and high reliability transmission but perhaps for moderate data rates.

One of the solutions for low latency data transmission is shorter transmission time intervals. In NR, in addition to transmission in a slot, a mini-slot transmission is also allowed to reduce latency. A mini-slot may consist of any number of 1 to 14 Orthogonal Frequency Division Multiplexing (OFDM) symbols. It should be noted that the concepts of slot and mini-slot are not specific to a specific service meaning that a mini-slot may be used for either eMBB, URLLC, or other services.

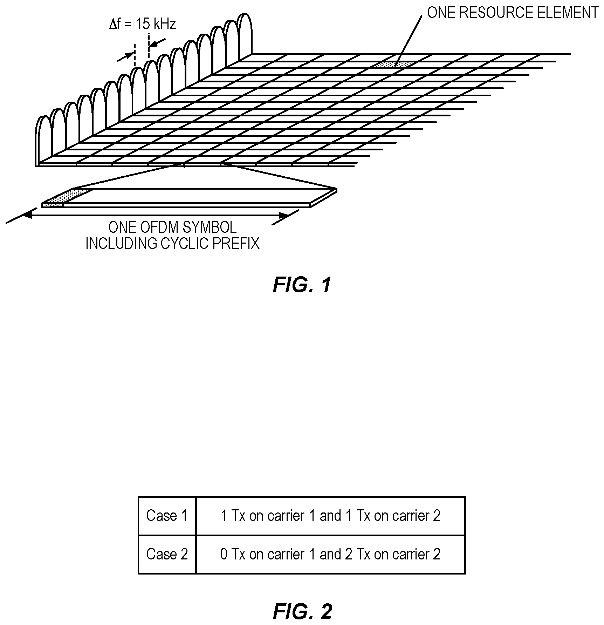

Figure 1 illustrates an exemplary radio resource in NR.

Carrier Aggregation (CA) is generally used in NR (5G) and Long Term Evolution (LTE) systems to improve User Equipment (UE) transmit/receive data rate. With CA, the UE typically operates initially on single serving cell called a primary cell (PCell). The Cell is operated on a component carrier (CC) in a frequency band. The UE is then configured by the network with one or more secondary serving cells (SCell(s)). Each SCell can correspond to a CC in the same frequency band (intra-band CA) or different frequency band (inter-band CA) from the frequency band of the CC corresponding to the PCell. For the UE to transmit/receive data on the SCell(s) (e.g., by receiving Downlink Shared Channel (DL-SCH) information on a Physical Downlink Shared Channel (PDSCH) or by transmitting Uplink Shared Channel (UL-SCH) on a Physical Uplink Shared Channel (PUSCH)), the SCell(s) need to be activated by the network. The SCell(s) can also be deactivated and later reactivated as needed via activation/deactivation signaling.

A UE can be configured with carrier aggregation to aggregate Frequency Division Duplexing (FDD) carriers, Time Division Duplexing (TDD) carriers, or both FDD and TDD carriers. A UE can indicate its carrier aggregation capability to the network, including whether the UE supports CA on the downlink and whether the UE supports CA on the uplink.

A UE supporting uplink CA across carriers can be assumed to have dedicated transmit (Tx) chains for each carrier, and hence is able to support CA without any restrictions. On the other hand, there can be UEs that may share some hardware (e.g., a Tx antenna, a power amplifier, phase locked loops, a transmitter chain circuit) across the two carriers, and hence may need special handling (e.g., via scheduling) to ensure proper operation. An example is shown Figure 2 where a UE has only 2 Tx chains, and the UE can transmit on the uplink on two carriers but with some restriction as shown in the table. Such a UE is not able to transmit 1 Tx on carrier 1 and 2 Tx on carrier 2 since it has only 2 Tx chains, and hence the UE can only support either case 1 or case 2 for transmitting on the uplink.

A switching gap is needed to allow the UE enough time to switch (e.g., move some hardware (or a Tx chain) from carrier 1 to carrier 2 or vice versa) between the two carriers. The network needs to provide switching gaps on one of the carriers and would also need to provide enough additional relaxation in UE PUSCH processing time, which is the time typically between end of an UL grant and start of the PUSCH.

A UE is configured with carrier aggregation between FDD and TDD carriers, with a carrier configured as primary carrier (or primary cell). An example band/band combination for this is shown below:

- Carrier 1 can be in FDD - 1.8GHz at 15kHz Subcarrier Spacing (SCS), 1Tx UL, 20MHz bandwidth (BW)
- Carrier 2 can be in TDD - 3.5GHz at 30kHz SCS with DDDSUDDSUU pattern or DDDSUUDDDD pattern, 2Tx UL, 80MHz BW

Another example band/band combination for this is:

- Carriers 1 and 2 can be in FDD - 1.8GHz at 15kHz SCS, 1Tx UL, 10MHz BW + 10 MHz BW
- Carriers 3 and 4 can be in TDD - 3.5GHz at 30kHz SCS with DDDSUDDSUU pattern or DDDSUUDDDD pattern, 2Tx UL, 40MHz BW + 40 MHz BW

In the pattern, D denotes Downlink slot, U denotes uplink slot, and S denotes slot which can contain symbols where UE receive on downlink, and symbols where UE can receive on the uplink, and some gap in between to allow downlink to uplink switching at the UE. Some symbols can be flexible symbols, i.e., which can be used for downlink or for uplink or reserved.

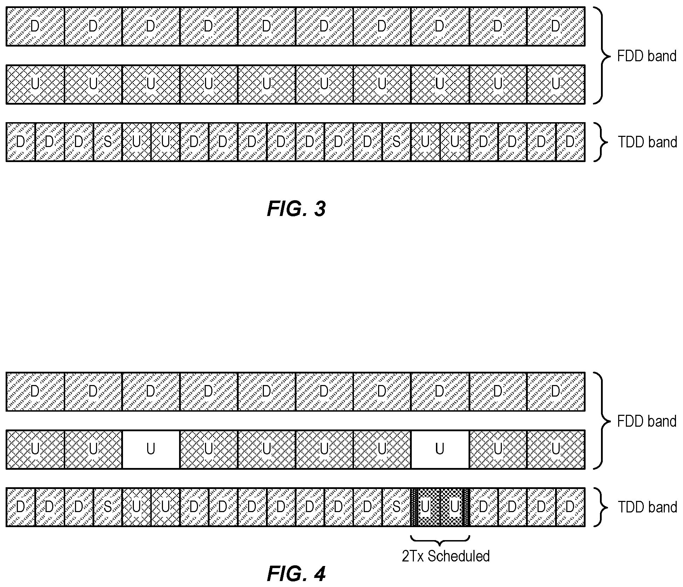

Figure 3 shows a baseline CA scenario where a UE aggregates the FDD and TDD carriers. In this scenario, the UE is expected to transmit with 1 Tx on carrier 1 and transmit with 1 or 2 Tx on carrier 2 at the same time, and hence the UE would have effectively 2 or 3 Tx overall. Tx can refer to a Tx chain, a transmitter chain, or transmit antenna.

Figure 4 shows a first fast-switched UL Tx CA scenario (e.g., option 1). A UE is configured with FDD-TDD CA. However, the UE does not simultaneously transmit on the FDD and TDD parts, or the UE can support transmission on the uplink on FDD and TDD in a time-division multiplexing. When 2 Tx transmission is scheduled on the TDD leg, some symbols are used (or truncated as) for a switching gap. The switching gap can be defined in units of symbols or absolute time (e.g., 1 Orthogonal Frequency Division Multiplexing (OFDM) symbol in the numerology of the uplink carrier on which the gap occurs or 4 OFDM symbols in the numerology of the uplink carrier on which the gap occurs). The switching gap enables moving a transmit chain from the FDD leg to the TDD leg to enable UL Multiple Input Multiple Output (MIMO) on TDD. No switching gap is needed when there is a 1 Tx transmission on the TDD leg.

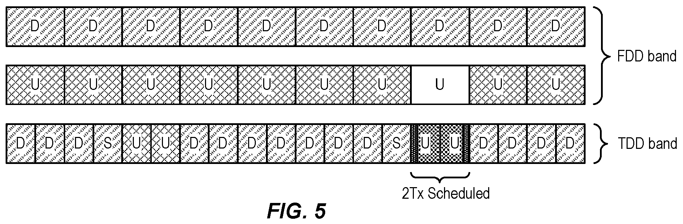

Figure 5 shows a second fast-switched UL Tx CA scenario (e.g., option 2). A UE is configured with FDD-TDD CA. However, the UE does not simultaneously transmit on the FDD and TDD only when the TDD part uses 2 Tx transmission. In other words, the UE can simultaneously transmit on the two carriers when FDD uses 1 Tx and TDD uses 1 Tx. When 2Tx transmission is scheduled on TDD leg, some symbols are used (or truncated as) for switching gap. The switching gap can be defined in units of symbols or absolute time (e.g., 1 OFDM symbol in the numerology of the uplink carrier on which the gap occurs or 4 OFDM symbols symbol in the numerology of the uplink carrier on which the gap occurs). The switching gap enables moving a transmit chain from FDD leg to TDD leg to enable UL MIMO on TDD. No switching gap can be needed when there is a 1Tx transmission on TDD leg.

The same principles of UL CA, fast-switched UL Tx CA scenarios can apply for the multi-carrier aggregation case where, as an example, the UE can transmit on only FDD carriers simultaneously (Carriers 1 and 2) or only TDD carriers simultaneously (carriers 3 and 4), but may not be able to transmit simultaneously on both the FDD and TDD carriers.

Next, some description is provided for PUSCH preparation time. The network schedules PUSCH transmissions for a UE such that the UE gets a minimum PUSCH preparation time (or processing time). For typical uplink data transmissions, the minimum processing time is the time between the end of reception of a Physical Downlink Control Channel (PDCCH) carrying the uplink grant and the start of the corresponding uplink transmission at the UE. The minimum processing time reflects the minimum time a UE needs to decode the PDCCH, parse the Downlink Control Information (DCI), prepare uplink data, and start the transmission. The UE indicates its processing time via UE capability (e.g., UE cap 1) that is typically SCS-based. Various means are specified in the standard to reflect various conditions which determine the minimum processing time for a given PUSCH transmission. For example, if Uplink Control Information (UCI) is to be multiplexed onto a PUSCH, then extra relaxation is provided for that PUSCH preparation. Similarly, if PDCCH uses a first SCS and PUSCH uses a second SCS, PUSCH preparation time is determined based on a reference SCS determined from the first and second SCS.

An example description of PUSCH preparation time is shown in the following excerpt from 3GPP Technical Specification (TS) 38.214 v16.1.0:

If the first uplink symbol in the PUSCH allocation for a transport block, including the DM-RS, as defined by the slot offset $K_2$ and the start and length indicator $SLIV$ of the scheduling DCI and including the effect of the timing advance, is no earlier than at symbol $L_2$, $L_2$ is defined as the next uplink symbol with its CP starting $T_{proc,2} = \max((N_2 + d_{2,1})(2048 + 144) \cdot \kappa 2^{-\mu} \cdot T_C, d_{2,2})$ after the end of the reception of the last symbol of the PDCCH carrying the DCI scheduling the PUSCH, then the UE shall transmit the transport block.

- $N_2$ is based on $\mu$ of for UE processing capability 1 and 2 respectively, where $\mu$ corresponds to the one of ($\mu_{DL}$, $\mu_{UL}$) resulting with the largest $T_{proc,2}$, where the $\mu_{DL}$ corresponds to the subcarrier spacing of the downlink with which the PDCCH carrying the DCI scheduling the PUSCH was transmitted and $\mu_{UL}$ corresponds to the subcarrier spacing of the uplink channel with which the PUSCH is to be transmitted, and $\kappa$ is defined in subclause 4.1 of [4, TS 38.211].

- $d_{2,1}$ can take values 0 or 1, based on whether the first symbol of PUSCH is DMRS-only or not.

- If the UE is configured with multiple active component carriers, the first uplink symbol in the PUSCH allocation further includes the effect of timing difference between component carriers as given in [11, TS 38.133].

- If UE is configured with capability 2, it follows capability 2 processing time, otherwise the baseline capability that the UE follows is capability 1.

- If the scheduling DCI triggered a switch of BWP, $d_{2,2}$ equals to the BWP switching time, otherwise $d_{2,2}$=0.

# EP 4 133 669 B1

Table 1

| $\mu$ | PUSCH preparation time $N_2$ [symbols] Capability 1 | PUSCH preparation time $N_2$ [symbols] Capability 2 |
|---|---|---|
| 0 | 10 | 5 |
| 1 | 12 | 5.5 |
| 2 | 23 | 11 for frequency range 1 |
| 3 | 36 | |

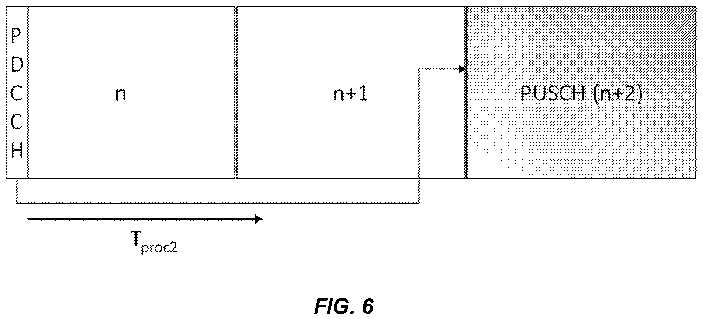

An example PUSCH transmission is shown in Figure 6. The figure shows a PDCCH in slot n and a corresponding scheduled PUSCH transmission in slot n+2. Since the scheduled PUSCH allows the UE enough preparation time (i.e., $>=T_{proc,2}$), the UE transmits on the PUSCH. If sufficient preparation time is not provided, the UE may or may not transmit the PUSCH, or in general, the UE behavior may be undefined.

WO 2014/111161 discloses a mechanism for controlling an uplink communication.

CN 110 234 136 discloses an LTE uplink carrier synchronous method.

Summary

Systems and methods are disclosed herein that enable fast-switched uplink (UL) transmit (Tx) across carriers. Embodiments of a method performed by a wireless communication device are disclosed. In one embodiment, a method performed by a wireless communication device comprises determining whether uplink transmit switching from a first carrier to a second carrier is needed for an uplink transmission and obtaining a value for an uplink transmission related timing parameter, where the value is a first value if uplink transmit switching is not needed and a second value if uplink transmit switching is needed. The method further comprises performing the uplink transmission, one or more actions related to the uplink transmission, or both the uplink transmission and the one or more actions related to the uplink transmission, based on the obtained value for the uplink transmission related timing parameter. In this manner, the impact to wireless communication device implementation complexity due to support of UL Tx switching can be reduced.

In one embodiment, the uplink transmission related timing parameter is a Physical Uplink Shared Channel (PUSCH) processing time. In one embodiment, the PUSCH processing time is a function of a PUSCH preparation time, $N_2$. In one embodiment, the value for the uplink transmission related parameter is a value for the PUSCH processing time, and obtaining the value for the uplink transmission related timing parameter comprises obtaining the value for the PUSCH processing time based on a first value of a PUSCH preparation time $N_2$ if uplink switch is not needed and based on a second value of the PUSCH preparation time $N_2$ if uplink switching is needed. In one embodiment, the second value of the PUSCH preparation time $N_2$ is a function of: (a) the first value of the PUSCH preparation time $N_2$, (b) a switching gap, (c) a numerology of the first carrier, (d) a numerology of the second carrier, or (e) any combination of two or more of (a)-(d). In one embodiment, the first value of the PUSCH preparation time $N_2$ is expressed as a number of time-domain symbols, and the second value of the PUSCH preparation time $N_2$ is the first value of the PUSCH preparation time $N_2$ plus one time-domain symbol. In one embodiment, the second value of the PUSCH preparation time $N_2$ is equal to the first value of the PUSCH preparation time $N_2$ plus ceiling(switching_gap/symbol_duration), where "switching_gap" is a length of a switching gap and "symbol_duration" is a duration of a time-domain symbol for a numerology of the second carrier. In one embodiment, the PUSCH processing time is $T_{proc,2}$, $T_{proc,CSI}$, $T_{proc,release}^{mux}$, $T_{proc,2}^{mux}$, or $T_{proc,CSI}^{mux}$.

In one embodiment, the uplink transmission is a PUSCH transmission, a PUSCH transmission with Uplink Control Information (UCI), an aperiodic Sounding Reference Signal (SRS) transmission, a Physical Random Access Channel (PRACH) transmission, or a Physical Uplink Control Channel (PUCCH) transmission.

In one embodiment, the second value is a function of: (a) the first value, (b) a switching gap, (c) a numerology of the first carrier, (d) a numerology of the second carrier, or (e) any combination of two or more of (a)-(d).

In one embodiment, the first value is expressed as a number of time-domain symbols, and the second value is the first value plus one time-domain symbol.

In one embodiment, the second value is equal to the first value plus ceiling(switching_gap/symbol_duration), where "switching_gap" is a length of a switching gap (e.g., configured or scheduled by the network) and "symbol_duration" is a duration of a time-domain symbol for a numerology of the second carrier.

Corresponding embodiments of a wireless communication device are also disclosed. In one embodiment, a wireless communication device is adapted to determine whether uplink transmit switching from a first carrier to a second carrier is needed for an uplink transmission and obtain a value for an uplink transmission related timing parameter, where the value is a first value if uplink transmit switching is not needed and a second value if uplink transmit switching is needed.

4

The wireless communication device is further adapted to perform the uplink transmission, one or more actions related to the uplink transmission, or both the uplink transmission and the one or more actions related to the uplink transmission, based on the obtained value for the uplink transmission related timing parameter.

In one embodiment, a wireless communication device comprises one or more transmitters, one or more receivers, and processing circuitry associated with the one o more transmitters and the one or more receivers. The processing circuitry is configured to cause the wireless communication device to determine whether uplink transmit switching from a first carrier to a second carrier is needed for an uplink transmission and obtain a value for an uplink transmission related timing parameter, where the value is a first value if uplink transmit switching is not needed and a second value if uplink transmit switching is needed. The wireless communication device is further adapted to perform the uplink transmission, one or more actions related to the uplink transmission, or both the uplink transmission and the one or more actions related to the uplink transmission, based on the obtained value for the uplink transmission related timing parameter.

Embodiments of a method performed by a base station are also disclosed. In one embodiment, a method performed by a base station comprises determining whether uplink transmit switching from a first carrier to a second carrier is needed for an uplink transmission from a particular wireless communication device and obtaining a value for an uplink transmission related timing parameter for the particular wireless communication device, where the value is a first value if uplink transmit switching is not needed and a second value if uplink transmit switching is needed. The method further comprises scheduling the uplink transmission from the particular wireless communication device based on the obtained value for the uplink transmission related timing parameter.

In one embodiment, the uplink transmission related timing parameter is a PUSCH processing time. In one embodiment, the PUSCH processing time is a function of a PUSCH preparation time, $N_2$. In one embodiment, the PUSCH processing time is $T_{proc,2}$, $T_{proc,CSI}$, $T_{proc,release}^{mux}$, $T_{proc,2}^{mux}$, or $T_{proc,CSI}^{mux}$.

In one embodiment, the uplink transmission is a PUSCH transmission, a PUSCH transmission with UCI, an aperiodic SRS transmission, a PRACH transmission, or a PUCCH transmission.

In one embodiment, the second value is a function of: (a) the first value, (b) a switching gap, (c) a numerology of the first carrier, (d) a numerology of the second carrier, or (e) any combination of two or more of (a)-(d).

In one embodiment, the first value is expressed as a number of time-domain symbols, and the second value is the first value plus one time-domain symbol.

In one embodiment, the second value is equal to the first value plus ceiling(switching_gap/symbol_duration), where "switching_gap" is a length of a switching gap (e.g., configured or scheduled by the network) and "symbol_duration" is a duration of a time-domain symbol for a numerology of the second carrier.

Corresponding embodiments of a base station are also disclosed. In one embodiment, a base station is adapted to determine whether uplink transmit switching from a first carrier to a second carrier is needed for an uplink transmission from a particular wireless communication device and obtain a value for an uplink transmission related timing parameter for the particular wireless communication device, where the value is a first value if uplink transmit switching is not needed and a second value if uplink transmit switching is needed. The base station is further adapted to schedule the uplink transmission from the particular wireless communication device based on the obtained value for the uplink transmission related timing parameter.

In one embodiment, a base station comprises processing circuitry configured to cause the base station to determine whether uplink transmit switching from a first carrier to a second carrier is needed for an uplink transmission from a particular wireless communication device and obtain a value for an uplink transmission related timing parameter for the particular wireless communication device, where the value is a first value if uplink transmit switching is not needed and a second value if uplink transmit switching is needed. The base station is further adapted to schedule the uplink transmission from the particular wireless communication device based on the obtained value for the uplink transmission related timing parameter.

Brief Description of the Drawings

The accompanying drawing figures incorporated in and forming a part of this specification illustrate several aspects of the disclosure, and together with the description serve to explain the principles of the disclosure.

Figure 1 illustrates an exemplary radio resource in New Radio (NR);
Figure 2 illustrates an example in which a User Equipment (UE) has only two Transmit (Tx) chains, and the UE can transmit on the uplink on two carriers but with restrictions;
Figure 3 shows a baseline Carrier Aggregation (CA) scenario where a UE aggregates Frequency Division Duplexing (FDD) and Time Division Duplexing (TDD) carriers;
Figure 4 shows a first fast-switched uplink (UL) Tx CA scenario;

Figure 5 shows a second fast-switched UL Tx CA scenario;

Figure 6 illustrate an example Physical Uplink Shared Channel (PUSH) transmission;

Figure 7 illustrates one example of a cellular communications system in which embodiments of the present disclosure may be implemented;

Figure 8 is a flow chart that illustrates the operation of a wireless communication device (e.g., a UE) in accordance at least some of the embodiments described herein;

Figure 9 is a flow chart that illustrates the operation of a base station in accordance at least some of the embodiments described herein;

Figures 10, 11, and 12 are schematic block diagrams of example embodiments of a radio access node (e.g., a base station or network node that implements at least some functionality of a base station);

Figures 13 and 14 are schematic block diagrams of example embodiments of a wireless communication device;

Figure 15 illustrates an example embodiment of a communication system in which embodiments of the present disclosure may be implemented;

Figure 16 illustrates example embodiments of the host computer, base station, and UE of Figure 15; and

Figures 17 and 18 are flow charts that illustrate example embodiments of methods implemented in a communication system such as that of Figure 15.

Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

**Radio Node:** As used herein, a "radio node" is either a radio access node or a wireless communication device.

**Radio Access Node:** As used herein, a "radio access node" or "radio network node" or "radio access network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), a relay node, a network node that implements part of the functionality of a base station (e.g., a network node that implements a gNB Central Unit (gNB-CU) or a network node that implements a gNB Distributed Unit (gNB-DU)) or a network node that implements part of the functionality of some other type of radio access node.

**Core Network Node:** As used herein, a "core network node" is any type of node in a core network or any node that implements a core network function. Some examples of a core network node include, e.g., a Mobility Management Entity (MME), a Packet Data Network Gateway (P-GW), a Service Capability Exposure Function (SCEF), a Home Subscriber Server (HSS), or the like. Some other examples of a core network node include a node implementing an Access and Mobility Management Function (AMF), a User Plane Function (UPF), a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.

**Communication Device:** As used herein, a "communication device" is any type of device that has access to an access network. Some examples of a communication device include, but are not limited to: mobile phone, smart phone, sensor device, meter, vehicle, household appliance, medical appliance, media player, camera, or any type of consumer electronic, for instance, but not limited to, a television, radio, lighting arrangement, tablet computer, laptop, or Personal Computer (PC). The communication device may be a portable, hand-held, computer-comprised, or vehicle-mounted mobile device, enabled to communicate voice and/or data via a wireless or wireline connection.

**Wireless Communication Device:** One type of communication device is a wireless communication device, which may be any type of wireless device that has access to (i.e., is served by) a wireless network (e.g., a cellular network). Some examples of a wireless communication device include, but are not limited to: a User Equipment device (UE) in a 3GPP network, a Machine Type Communication (MTC) device, and an Internet of Things (IoT) device. Such wireless communication devices may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The wireless communication device may be a portable, hand-held, computer-comprised, or vehicle-mounted mobile device, enabled to communicate voice and/or data via a wireless connection.

**Network Node:** As used herein, a "network node" is any node that is either part of the RAN or the core network of a cellular communications network/system.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

To support fast-switched uplink (UL) transmit (Tx) Carrier Aggregation (CA) scenarios (e.g., option 1 or 2 in the Background description above), the network must provision switching gaps. Further, since the network can schedule Physical Uplink Shared Channels (PUSCHs) on the two carriers dynamically, the UE would need to be provisioned with sufficient preparation time so that it can decode a Downlink Control Information (DCI) and, determine whether to switch the hardware or Tx chain (from one carrier to another) based on the contents of the DCI, and then prepare PUSCH accordingly. Thus, additional time can be needed to reflect the extra step of switching of Tx in the PUSCH preparation time.

There currently exist certain challenge(s). The existing solution provides processing time relaxation only for PUSCH transmissions in the form of relaxation for $T_{proc,2}$, but according to specification that means the processing time relaxation is applicable only to the case when a UE transmits PUSCH with uplink data without any Uplink Control Information (UCI) multiplexed on it. All other PUSCH scheduling will not be provisioned with relaxation due to UL Tx switching and hence UE complexity will increase to handle such PUSCH scheduling along with UL Tx switching.

Certain aspects of the present disclosure and their embodiments may provide solutions to the aforementioned or other challenges. The proposed solution(s) includes, in some embodiments, one or more of the following aspects: (1) the PUSCH preparation time for PUSCH timing capability ($N_2$) is redefined to reflect the extra processing time relaxation due to uplink Tx switching, (2) extra processing time relaxation is introduced due to uplink Tx switching for other uplink processing times, including, e.g., those defined in 3GPP specification as: $T_{proc,CSI}$, $T_{proc,release}^{mux}$, $T_{proc,2}^{mux}$, and $T_{proc,CSI}^{mux}$.

Certain embodiments may provide one or more of the following technical advantage(s). Embodiments of the proposed solution(s) may reduce impact to UE implementation complexity due to support of UL Tx switching.

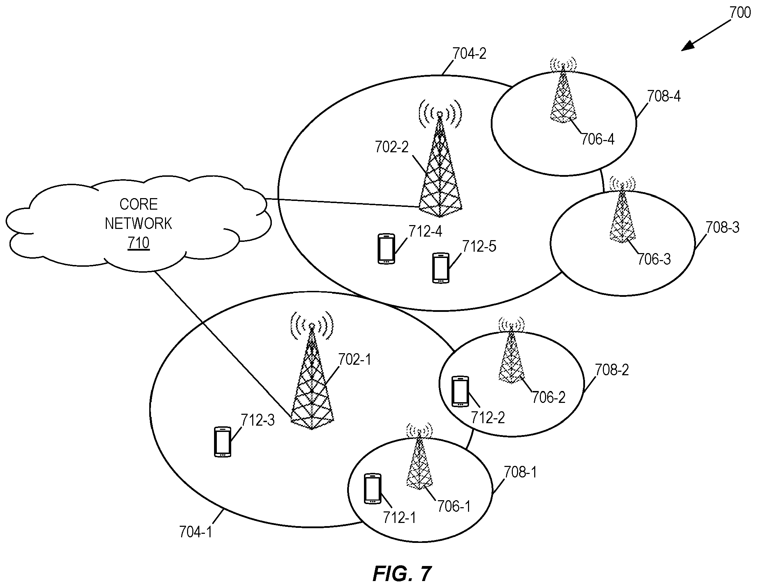

Figure 7 illustrates one example of a cellular communications system 700 in which embodiments of the present disclosure may be implemented. In the embodiments described herein, the cellular communications system 700 is a 5G System (5GS) including a Next Generation RAN (NG-RAN) and a 5G Core (5GC). However, the present disclosure is not limited thereto. Embodiments of the present disclosure may be used in other types of cellular communications system such as, e.g., an Evolved Packet System (EPS) including an Evolved Universal Terrestrial Radio Access Network (E-UTRAN) (i.e., an LTE RAN). In this example, the RAN includes base stations 702-1 and 702-2, which in the 5GS include NR base stations (gNBs) and optionally next generation eNBs (ng-eNBs) (i.e., LTE RAN nodes connected to the 5GC), , controlling corresponding (macro) cells 704-1 and 704-2. The base stations 702-1 and 702-2 are generally referred to herein collectively as base stations 702 and individually as base station 702. Likewise, the (macro) cells 704-1 and 704-2 are generally referred to herein collectively as (macro) cells 704 and individually as (macro) cell 704. The RAN may also include a number of low power nodes 706-1 through 706-4 controlling corresponding small cells 708-1 through 708-4. The low power nodes 706-1 through 706-4 can be small base stations (such as pico or femto base stations) or Remote Radio Heads (RRHs), or the like. Notably, while not illustrated, one or more of the small cells 708-1 through 708-4 may alternatively be provided by the base stations 702. The low power nodes 706-1 through 706-4 are generally referred to herein collectively as low power nodes 706 and individually as low power node 706. Likewise, the small cells 708-1 through 708-4 are generally referred to herein collectively as small cells 708 and individually as small cell 708. The cellular communications system 700 also includes a core network 710, which in the 5GS is referred to as the 5G Core (5GC). The base stations 702 (and optionally the low power nodes 706) are connected to the core network 710.

The base stations 702 and the low power nodes 706 provide service to wireless communication devices 712-1 through 712-5 in the corresponding cells 704 and 708. The wireless communication devices 712-1 through 712-5 are generally referred to herein collectively as wireless communication devices 712 and individually as wireless communication device 712. In the following description, the wireless communication devices 712 are oftentimes UEs and as used sometimes referred to as UEs or UEs 712, but the present disclosure is not limited thereto.

In certain embodiments, extra processing time is provisioned for PUSCH preparation in case there is switching time present due to UL Tx switching. For example, if a UE is configured with two uplink carriers (CC1 and CC2) and is configured with UL Tx switching and the UE transmits on the first carrier (CC1) and is scheduled to transmit on the second carrier (CC2), the UE is provisioned with a switching gap (e.g., to allow the UE to switch from CC1 to CC2), and the preparation time for the transmission on the second carrier (CC2) should take into account the presence/provisioning of the switching gap. If a UE determines that the scheduling command does not provision enough preparation time for a given uplink transmission on second carrier, the UE may skip or not transmit on the second carrier or discard the scheduling command as being invalid.

In one embodiment, the UE assumes the PUSCH preparation time for PUSCH timing denoted by $N_2$ (in symbols of a numerology) is a first value when there is no uplink Tx switching for the PUSCH, and the UE assumes it is a second value when there is uplink Tx switching for the PUSCH. In one embodiment, the second value is based on the first value, switching gap, and/or the numerology. For example, if switching gap is 35 microseconds ($\mu s$), the second value can be given by $N_2 = N_2 + 1$ for the 15 kHz numerology. The 1 symbol in numerology of 15 kHz denotes $70 \mu s$. Once an updated N2 is defined for the case when there is uplink Tx switching for PUSCH, the corresponding $N_2$ can be used for all processing time calculations involving uplink transmission on the second carrier (i.e., the carrier to which uplink Tx switching is performed) when there is uplink Tx switching. More generally, the increased processing time can be provided for several UL transmission related procedures. The uplink transmission can be a PUSCH transmission on the second carrier, PUSCH with UCI, an aperiodic Sounding Reference Signal (SRS) transmission on the second carrier, Physical Random Access Channel (PRACH) transmission, Physical Uplink Control Channel (PUCCH) transmission, etc. Basically, the modified value of N2 can be used instead of $N_2$.

The UL transmission related procedure can be, for example, transmission of a Channel State Information (CSI) report using PUSCH, where the time difference between end of the last symbol of a PDCCH triggering the CSI report and the first uplink PUSCH symbol to carry the CSI report depends on a processing time $T_{proc,CSI}$ where $T_{proc,CSI} = (Z)(2048 + 144) \cdot \kappa 2^{-\mu} \cdot T_C$, $\kappa$ 38.211, and $\mu$ corresponds to the subcarrier spacing.

The embodiment above can be used for identification of a timeline condition for transmission of UCI for the following cases:

- A case where a UE would transmit multiple overlapping PUCCHs in a slot or overlapping PUCCH(s) and PUSCH(s) in a slot and the UE is configured to multiplex different UCI types in one PUCCH, and at least one of the multiple overlapping PUCCHs or PUSCHs is in response to a DCI format detection by the UE. For this case,

  ○ the UE can use a processing time , $T_{proc,1}^{mux,i} = \left(N_1 + d_{1,1} + 1\right) \cdot (2048 + 144)$ to determine if the first symbol $S_0$ of the earliest PUCCH or PUSCH, among a group overlapping PUCCHs and PUSCHs in the slot, satisfies certain timeline conditions.

  ○ Alternately, the UE can use a processing time $T_{proc,release}^{mux,i} = (N + 1) \cdot (2048 + 144) \cdot \kappa \cdot 2^{-\mu} \cdot T_C$ to determine if the first symbol $S_0$ of the earliest PUCCH or PUSCH, among a group overlapping PUCCHs and PUSCHs in the slot, satisfies the condition that $S_0$ is not before a symbol with cyclic prefix (CP) starting after $T_{proc,release}^{mux}$ after a last symbol of any corresponding SPS PDSCH release or of a DCI format 1_1 indicating SCell dormancy

In case where the transmission related procedure uses another variable instead of $N_2$, for example, Z or $N_1$, a modified Z or $N_1$ (e.g., by adding one extra symbol) like modified $N_2$ can be used.

An example is as follows. If UE is configured with uplink Tx switching and if there is an uplink Tx switching for the uplink transmission, $d_{txs}$ is given by

$$d_{txs} = \left\lceil \frac{switching\_gap}{(2048 + 144) \cdot \kappa 2^{-\mu} \cdot T_C} \right\rceil$$

where switching_gap denotes the switching gap for uplink Tx switching (e.g., in seconds), and the denominator is the symbol duration for the corresponding numerology, otherwise $d_{txs} = 0$.

In another example, if UE is configured with uplink Tx switching and if there is an uplink Tx switching for the uplink transmission, an extra relaxation $d_{txs}$ given by

$$d_{txs} = \left\lceil \frac{switching\_gap}{(2048 + 144) \cdot \kappa 2^{-\mu} \cdot T_C} \right\rceil$$

is added to the $N_2$, where switching_gap denotes the switching gap for uplink Tx switching (in milliseconds), and the denominator is the symbol duration for the corresponding numerology, otherwise not extra relaxation is added to $N_2$ value.

For example, with a 35 $\mu s$ switching gap, $d_{txs}$ = 1 or 1 extra symbol relaxation.

The extra relaxation can be given by rounding up the switching gap to an integer number of OFDM symbols in the given numerology. For example, if switching gap is 35 $\mu s$ and the numerology is 15 kHz (which has OFDM symbol duration of 70 $\mu s$), the extra relaxation is given by 1 OFDM symbol in 15 kHz numerology.

The same principle can be applied for both PUSCH timing capability 1 or PUSCH timing capability 2, as illustrated in Tables 1 and 2 below.

**Table 1: PUSCH preparation time for PUSCH timing capability 1**

| $\mu$ | PUSCH preparation time $N_2$ [symbols] |
|---|---|
| 0 | 10 + $d_{txs}$ |
| 1 | 12+ $d_{txs}$ |
| 2 | 23+ $d_{txs}$ |
| 3 | 36 |

**Table 2: PUSCH preparation time for PUSCH timing capability 2**

| $\mu$ | PUSCH preparation time $N_2$ [symbols] |
|---|---|
| 0 | 5+ $d_{txs}$ |
| 1 | 5.5+ $d_{txs}$ |
| 2 | 11 + $d_{txs}$ for frequency range 1 |

If a UE is configured with uplink Tx switching, a default value of $N_2$ can be defined to be based on second value, i.e., assuming there is uplink Tx switching. This default value is useful for cases in which the $N_2$ value is used as a numerical parameter for certain other settings not necessarily associated with an actual uplink transmission such as for identifying processing time related to configured uplink grant cancellation timeline.

In another example, if a UE is configured with uplink Tx switching, for calculation of any uplink processing time including one or more of $T_{proc,2}$, $T_{proc,CSI}$, $T_{proc,release}^{mux}$, $T_{proc,2}^{mux}$, and $T_{proc,CSI}^{mux}$, an extra relaxation $d_{txs}$ is added to the N2 value or directly therein whenever there is uplink Tx switching for an associated uplink transmission involved in that calculation. If there are multiple overlapping uplink transmissions, the extra relaxation $d_{txs}$ is always added even if only one of them is associated with uplink switching.

The following processing times involve $N_2$ and, here, an extra relaxation $d_{txs}$ is added to the N2 value therein whenever there is uplink Tx switching for an associated uplink transmission involved in that calculation.

$$T_{proc,2}^{mux,i} = max\left((N_2 + d_{2,1} + 1) \cdot (2048 + 144) \cdot \kappa \cdot 2^{-\mu} \cdot T_C, d_{2,2}\right)$$

$$T_{proc,2}^{mux,i} = (N_2 + 1) \cdot (2048 + 144) \cdot \kappa \cdot 2^{-\mu} \cdot T_C$$

The following processing time does not involve $N_2$ but an extra relaxation $d_{txs}$ can be added to the Z or d value or directly therein whenever there is uplink Tx switching for an associated uplink transmission involved in that calculation.

$$T_{proc,CSI}^{mux} = max\left((Z+d) \cdot (2048+144) \cdot \kappa \cdot 2^{-\mu} \cdot T_C, d_{2,2}\right)$$

The following processing time does not involve $N_2$ but an extra relaxation $d_{txs}$ can added to the $N_1$ or N value or directly therein whenever there is uplink Tx switching for an associated uplink transmission involved in that calculation.

$$T_{proc,1}^{mux,i} = \left(N_1 + d_{1,1} + 1\right) \cdot (2048 + 144) \cdot \kappa \cdot 2^{-\mu} \cdot T_C,$$

$$T_{proc,release}^{mux,i} = (N + 1) \cdot (2048 + 144) \cdot \kappa \cdot 2^{-\mu} \cdot T_C$$

The extra relaxation can be dependent on the switching gap or symbol duration in the reference numerology, wherein the same numerology as that used for $N_2$ determination can be used, or the numerology used for determination in calculating the corresponding processing time can be used.

SRS is an example where an embodiment of the present disclosure is also beneficial. The current specification text for SRS transmission and processing timeline is as below where the bold underlined text denotes a possible update to accommodate UL Tx switching as per an embodiment of the present disclosure.

the UE receives a downlink DCI, a group common DCI, or an uplink DCI based command where a codepoint of the DCI may trigger one or more SRS resource set(s). For SRS in a resource set with usage set to 'codebook' or 'antennaSwitching', the minimal time interval between the last symbol of the PDCCH triggering the aperiodic SRS transmission and the first symbol of SRS resource is $N_2$. Otherwise, the minimal time interval between the last symbol of the PDCCH triggering the aperiodic SRS transmission and the first symbol of SRS resource is $N_2$ + minimal time interval in units of OFDM symbols is counted based on the minimum subcarrier spacing between the PDCCH and the aperiodic SRS. **In case UE is configured with UL Tx switching and there is uplink Tx switching needed for the aperiodic SRS transmission UL Tx, $N_2$ is incremented by**

$$d_{txs} = \left\lceil \frac{switching\_gap}{(2048+144)\cdot\kappa 2^{-\mu}\cdot T_C} \right\rceil$$ **, where u is the the minimum subcarrier spacing between the PDCCH and the aperiodic SRS, and switching gap denotes the switching gap for uplink Tx switching,), $\kappa$ is defined in clause 4.1 of [4, TS 38.211].**

The gNB can schedule a UE with uplink transmissions such that the minimum processing times are satisfied.

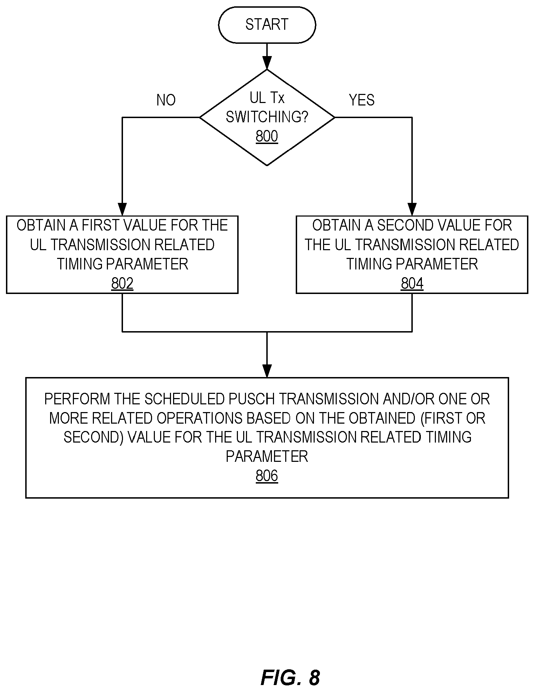

Figure 8 is a flow chart that illustrates the operation of a wireless communication device 712 (e.g., a UE) in accordance at least some of the embodiments described above. As illustrated, the wireless communication device 712 determines whether there is uplink Tx switching for a PUSCH transmission (step 800). If not, the wireless communication device 712 obtains the first value for an uplink transmission related timing parameter (step 802). Otherwise, the wireless communication device 712 obtains a second value for the uplink transmission related timing parameter (step 804). The wireless communication device 712 then performs the scheduled PUSCH transmission and/or one or more related operations based on the obtained (first or second) value for the uplink transmission related timing parameter (step 806).

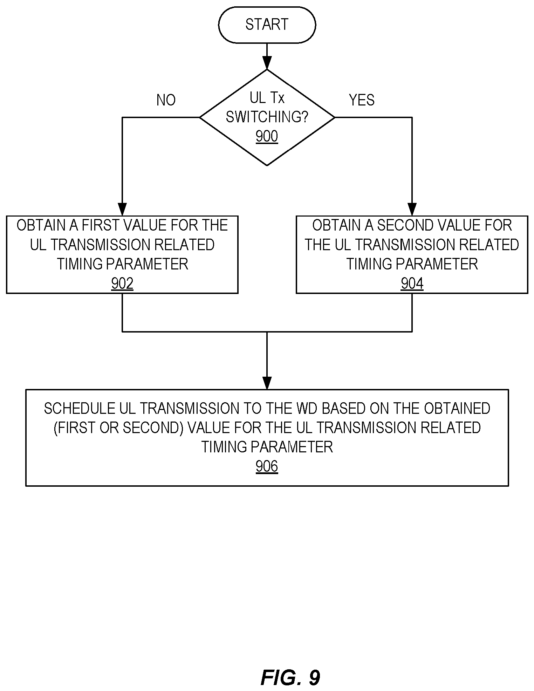

Figure 9 is a flow chart that illustrates the operation of a base station (e.g., base station 702 or gNB) in accordance at least some of the embodiments described above. As illustrated, the base station determines whether uplink transmit switching from a first carrier to a second carrier is needed for an uplink transmission from a particular wireless communication device 712 (step 900). The base station obtains a first value for an uplink transmission related timing parameter for the particular wireless communication device 712 if uplink transmit switching is not needed (step 902). Otherwise, the base station obtains a second value for the uplink transmission related timing parameter if uplink transmit switching is needed (904). In this example, the base station schedules the uplink transmission from the particular wireless communication device 712 based on the obtained value for the uplink transmission related timing parameter (step 902).

Some aspects of the present disclosure can be expressed in terms of proposals to 3GPP with respect to the NR specifications as follows:

**Impact on PUSCH preparation time:**

Several aspects related to impact on UE PUSCH preparation procedure were discussed in RAN1#100-eMeeting and related agreements are captured in R1-2001274 - "[100e-5.1LS-TxSwitching-02] Email discussion/approval on remaining issues on PUSCH preparation procedure", China Telecom, RAN1#100-e, February 2020.

Regarding the how to capture the increased PUSCH preparation time in the specification, our preference is to increment N2 by the length of switching duration, i.e., replace *N2* with *N2'* where *N2' = N2 + $d_{txs}$* and

$$d_{txs} = \left\lceil \frac{T_{switch}}{(2048+144)\cdot\kappa 2^{-\mu}\cdot T_C} \right\rceil$$ with $T_{switch}$ being the UE capability reported for length of UL switching period as agreed in RAN4 (see R1-2001522 - "LS on Tx switching between two uplink carriers2", RAN4 · RAN1,RAN2 LS, RAN1#100bis-e-Meeting, April 2020).

In addition to the update for $T_{proc,2}$, it should also be clarified whether the increased *N2* is also used in computation of $T_{proc,2}^{mux}$ and aperiodic SRS switching delay.

Proposal 1

- For capturing impact of increased PUSCH processing time, replace *N2* with *N2'* where *N2' = N2 + d_{txs}* and $d_{txs} = \left\lceil \frac{T_{switch}}{(2048+144)\cdot\kappa 2^{-\mu}\cdot T_C} \right\rceil$ with *T_switch* being the UE capability reported for length of UL switching period.

Observation 1

- It should be clarified whether the increased N2 is also used in computation of $T_{proc,2}^{mux}$ and speriodic SRS switching delay.

**Condition and Presence of switching period for UL CA:** This issue was also discussed in RAN1#100-eMeeting and related agreements are captured in R1-2001275 - "[100e-5.1 LS-TxSwitching-03] Email discussion/approval on remaining issues on inter-band UL CA", China Telecom, RAN1#100-e, February 2020. The main open issue for this area is the below Proposal (from R1-2001275) related to Option 1 and Option 2:

*Proposal 1:*

• For inter-band UL CA, make down-selection on the following two options in RAN1#100bis:
- Option 1: **If uplink Tx switching is configured,** UE is not expected to be scheduled or configured with UL transmission on carrier 2 for case 1.

|        | Number of **Tx chains** in WID (carrier 1 + carrier 2) | Number of **antenna ports** for UL transmission (carrier 1 + carrier 2) |
|--------|--------------------------------------------------------|-------------------------------------------------------------------------|
| Case 1 | 1T+1T                                                  | 1P+0P                                                                   |
| Case 2 | 0T+2T                                                  | 0P+2P, 0P+1P                                                            |

- Option 2: **If uplink Tx switching is configured,** UE can be scheduled or configured with UL transmission on both carrier 1 and carrier 2 for case 1.

  ∘ UE can be scheduled or configured with UL transmission on either carrier 1 or carrier 2
  ∘ UE can be scheduled or configured with UL transmission on both carrier 1 and carrier 2 simultaneously

|        | Number of **Tx chains** in WID (carrier 1 + carrier 2) | Number of **antenna ports** for UL transmission (carrier 1 + carrier 2) |
|--------|--------------------------------------------------------|-------------------------------------------------------------------------|
| Case 1 | 1T+1T                                                  | 1P+0P, 1P+1P, [0P+1P]                                                   |
| Case 2 | 0T+2T                                                  | 0P+2P, [0P+1P]                                                          |

• If no consensus on the down-selection in RAN1#100bis, UE can report via capability signaling which Option (between Option 1 and Option 2) is supported for the case when uplink Tx switching is configured.
As discussed in detail in our previous contribution (R1-2000883 - "RAN1 aspects of UL Tx switching", Ericsson, RAN1#100-e, February 2020), and email discussion [100e-5.1LS-TxSwitching-03], our preference is to support Option 2.
In RAN1#100-eMeeting, a 'compromise proposal' to support both Option 2 and Option 1 as different UE capabilities was discussed. If such capability signaling is introduced, we prefer to define the capability as shown in Proposal 3.

Proposal 2

- Option 2 (i.e., "UE can be scheduled UL transmission on both carrier 1 and carrier 2 for case 1 simultaneously") should be supported for defining the condition and presence of switching periods for UL tx switching with CA case.

Proposal 3

If UE capability between Option 1 and Option 2 is introduced, the capability is defined as follows:

- For an inter-band band-combination for which the UE indicates support for UL CA (i.e., "CA case")

  ○ Introduce additional UE capability to indicate the supported UE behavior when UL Tx switching is configured for the UE
  ○ The supported UE behavior can be according to Option 1 or Option 2

    ■ Option 1: When configured for UL Tx switching, the UE is not expected to be scheduled or configured with UL transmission on both carrier 1 and carrier 2 simultaneously.
    ■ Option 2: When configured for UL Tx switching, the UE can be scheduled or configured with UL transmission on both carrier 1 and carrier 2 for case 1.

      - UE can be scheduled or configured with UL transmission on either carrier 1 or carrier 2
      - UE can be scheduled or configured with UL transmission on both carrier 1 and carrier 2 simultaneously

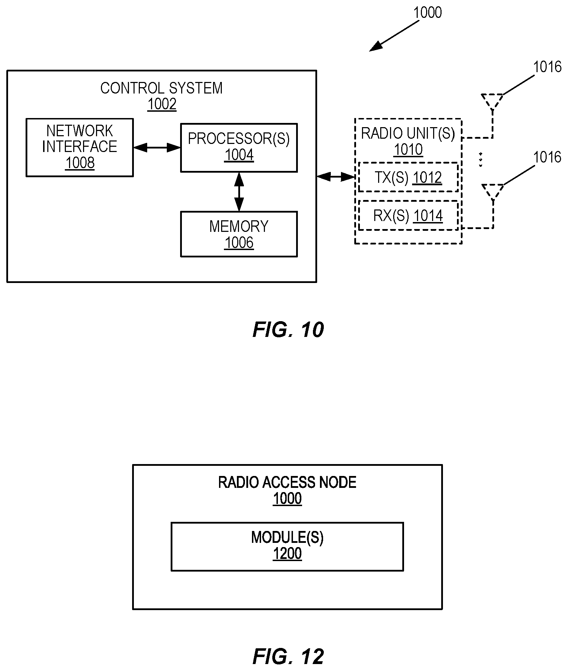

Figure 10 is a schematic block diagram of a radio access node 1000 according to some embodiments of the present disclosure. Optional features are represented by dashed boxes. The radio access node 1000 may be, for example, a base station 702 or 706 or a network node that implements all or part of the functionality of the base station 702 or gNB described herein. As illustrated, the radio access node 1000 includes a control system 1002 that includes one or more processors 1004 (e.g., Central Processing Units (CPUs), Application Specific Integrated Circuits (ASICs), Field Programmable Gate Arrays (FPGAs), and/or the like), memory 1006, and a network interface 1008. The one or more processors 1004 are also referred to herein as processing circuitry. In addition, the radio access node 1000 may include one or more radio units 1010 that each includes one or more transmitters 1012 and one or more receivers 1014 coupled to one or more antennas 1016. The radio units 1010 may be referred to or be part of radio interface circuitry. In some embodiments, the radio unit(s) 1010 is external to the control system 1002 and connected to the control system 1002 via, e.g., a wired connection (e.g., an optical cable). However, in some other embodiments, the radio unit(s) 1010 and potentially the antenna(s) 1016 are integrated together with the control system 1002. The one or more processors 1004 operate to provide one or more functions of a radio access node 1000 as described herein (e.g., one or more functions of a base station 702 or gNB as described herein). In some embodiments, the function(s) are implemented in software that is stored, e.g., in the memory 1006 and executed by the one or more processors 1004.

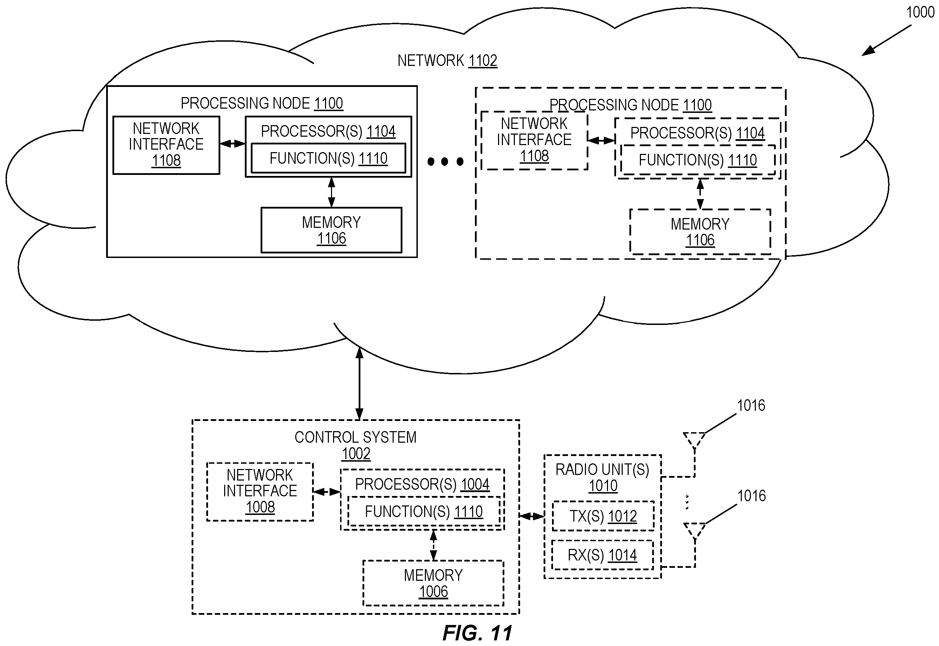

Figure 11 is a schematic block diagram that illustrates a virtualized embodiment of the radio access node 1000 according to some embodiments of the present disclosure. This discussion is equally applicable to other types of network nodes. Further, other types of network nodes may have similar virtualized architectures. Again, optional features are represented by dashed boxes.

As used herein, a "virtualized" radio access node is an implementation of the radio access node 1000 in which at least a portion of the functionality of the radio access node 1000 is implemented as a virtual component(s) (e.g., via a virtual machine(s) executing on a physical processing node(s) in a network(s)). As illustrated, in this example, the radio access node 1000 may include the control system 1002 and/or the one or more radio units 1010, as described above. The control system 1002 may be connected to the radio unit(s) 1010 via, for example, an optical cable or the like. The radio access node 1000 includes one or more processing nodes 1100 coupled to or included as part of a network(s) 1102. If present, the control system 1002 or the radio unit(s) are connected to the processing node(s) 1100 via the network 1102. Each processing node 1100 includes one or more processors 1104 (e.g., CPUs, ASICs, FPGAs, and/or the like), memory 1106, and a network interface 1108.

In this example, functions 1110 of the radio access node 1000 described herein (e.g., one or more functions of a base station 702 or gNB as described herein) are implemented at the one or more processing nodes 1100 or distributed across the one or more processing nodes 1100 and the control system 1002 and/or the radio unit(s) 1010 in any desired manner. In some particular embodiments, some or all of the functions 1110 of the radio access node 1000 described herein are implemented as virtual components executed by one or more virtual machines implemented in a virtual environment(s) hosted by the processing node(s) 1100. As will be appreciated by one of ordinary skill in the art, additional signaling or communication between the processing node(s) 1100 and the control system 1002 is used in order to carry out at least some of the desired functions 1110. Notably, in some embodiments, the control system 1002 may not be included, in which case the radio unit(s) 1010 communicate directly with the processing node(s) 1100 via an appropriate network interface(s).

In some embodiments, a computer program including instructions which, when executed by at least one processor, causes the at least one processor to carry out the functionality of radio access node 1000 or a node (e.g., a processing node 1100) implementing one or more of the functions 1110 of the radio access node 1000 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 12 is a schematic block diagram of the radio access node 1000 according to some other embodiments of the present disclosure. The radio access node 1000 includes one or more modules 1200, each of which is implemented in software. The module(s) 1200 provide the functionality of the radio access node 1000 described herein (e.g., one or more functions of a base station 702 or gNB as described herein). This discussion is equally applicable to the processing node 1100 of Figure 11 where the modules 1200 may be implemented at one of the processing nodes 1100 or distributed across multiple processing nodes 1100 and/or distributed across the processing node(s) 1100 and the control system 1002.

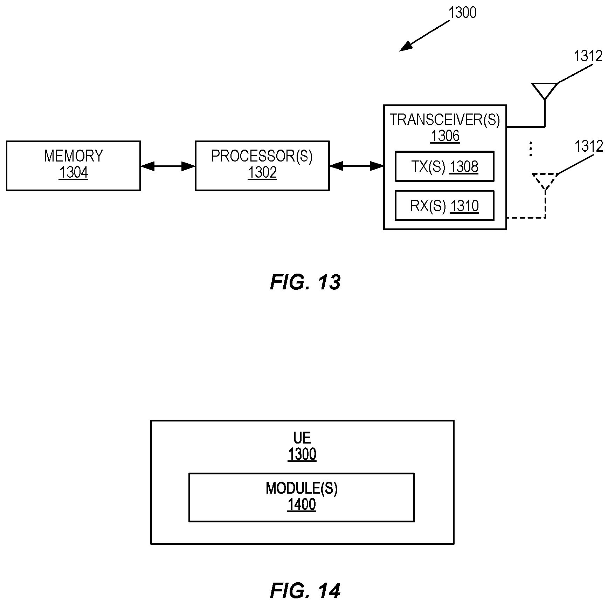

Figure 13 is a schematic block diagram of a wireless communication device 1300 according to some embodiments of the present disclosure. As illustrated, the wireless communication device 1300 includes one or more processors 1302 (e.g., CPUs, ASICs, FPGAs, and/or the like), memory 1304, and one or more transceivers 1306 each including one or more transmitters 1308 and one or more receivers 1310 coupled to one or more antennas 1312. The transceiver(s) 1306 includes radio-front end circuitry connected to the antenna(s) 1312 that is configured to condition signals communicated between the antenna(s) 1312 and the processor(s) 1302, as will be appreciated by on of ordinary skill in the art. The processors 1302 are also referred to herein as processing circuitry. The transceivers 1306 are also referred to herein as radio circuitry. In some embodiments, the functionality of the wireless communication device 1300 described above (e.g., one or more functions of a wireless communication device 712 or UE described herein) may be fully or partially implemented in software that is, e.g., stored in the memory 1304 and executed by the processor(s) 1302. Note that the wireless communication device 1300 may include additional components not illustrated in Figure 13 such as, e.g., one or more user interface components (e.g., an input/output interface including a display, buttons, a touch screen, a microphone, a speaker(s), and/or the like and/or any other components for allowing input of information into the wireless communication device 1300 and/or allowing output of information from the wireless communication device 1300), a power supply (e.g., a battery and associated power circuitry), etc.

In some embodiments, a computer program including instructions which, when executed by at least one processor, causes the at least one processor to carry out the functionality of the wireless communication device 1300 according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 14 is a schematic block diagram of the wireless communication device 1300 according to some other embodiments of the present disclosure. The wireless communication device 1300 includes one or more modules 1400, each of which is implemented in software. The module(s) 1400 provide the functionality of the wireless communication device 1300 described herein (e.g., one or more functions of a wireless communication device 712 or UE described herein).

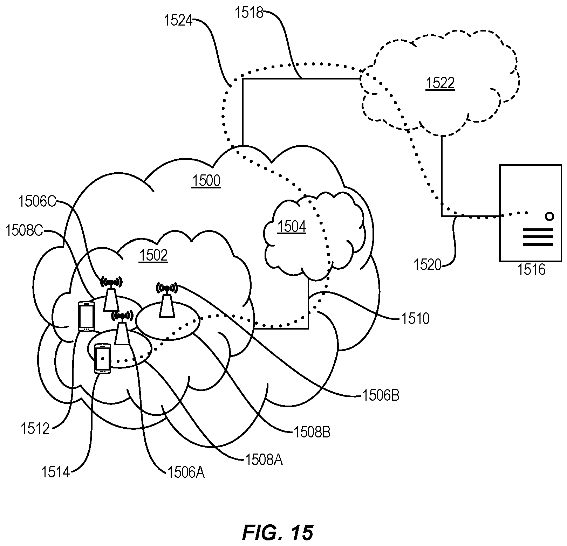

With reference to Figure 15, in accordance with an embodiment, a communication system includes a telecommunication network 1500, such as a 3GPP-type cellular network, which comprises an access network 1502, such as a RAN, and a core network 1504. The access network 1502 comprises a plurality of base stations 1506A, 1506B, 1506C, such as Node Bs, eNBs, gNBs, or other types of wireless Access Points (APs), each defining a corresponding coverage area 1508A, 1508B, 1508C. Each base station 1506A, 1506B, 1506C is connectable to the core network 1504 over a wired or wireless connection 1510. A first UE 1512 located in coverage area 1508C is configured to wirelessly connect to, or be paged by, the corresponding base station 1506C. A second UE 1514 in coverage area 1508A is wirelessly connectable to the corresponding base station 1506A. While a plurality of UEs 1512, 1514 are illustrated in this example, the disclosed embodiments are equally applicable to a situation where a sole UE is in the coverage area or where a sole UE is connecting to the corresponding base station 1506.

The telecommunication network 1500 is itself connected to a host computer 1516, which may be embodied in the hardware and/or software of a standalone server, a cloud-implemented server, a distributed server, or as processing resources in a server farm. The host computer 1516 may be under the ownership or control of a service provider, or may be operated by the service provider or on behalf of the service provider. Connections 1518 and 1520 between the telecommunication network 1500 and the host computer 1516 may extend directly from the core network 1504 to the host computer 1516 or may go via an optional intermediate network 1522. The intermediate network 1522 may be one of, or a combination of more than one of, a public, private, or hosted network; the intermediate network 1522, if any, may be a backbone network or the Internet; in particular, the intermediate network 1522 may comprise two or more sub-networks (not shown).

The communication system of Figure 15 as a whole enables connectivity between the connected UEs 1512, 1514 and the host computer 1516. The connectivity may be described as an Over-the-Top (OTT) connection 1524. The host computer 1516 and the connected UEs 1512, 1514 are configured to communicate data and/or signaling via the OTT connection 1524, using the access network 1502, the core network 1504, any intermediate network 1522, and possible further infrastructure (not shown) as intermediaries. The OTT connection 1524 may be transparent in the sense that the participating communication devices through which the OTT connection 1524 passes are unaware of routing of uplink and downlink communications. For example, the base station 1506 may not or need not be informed about the past routing of an incoming downlink communication with data originating from the host computer 1516 to be forwarded (e.g., handed over) to a connected UE 1512. Similarly, the base station 1506 need not be aware of the future routing of an outgoing uplink communication originating from the UE 1512 towards the host computer 1516.

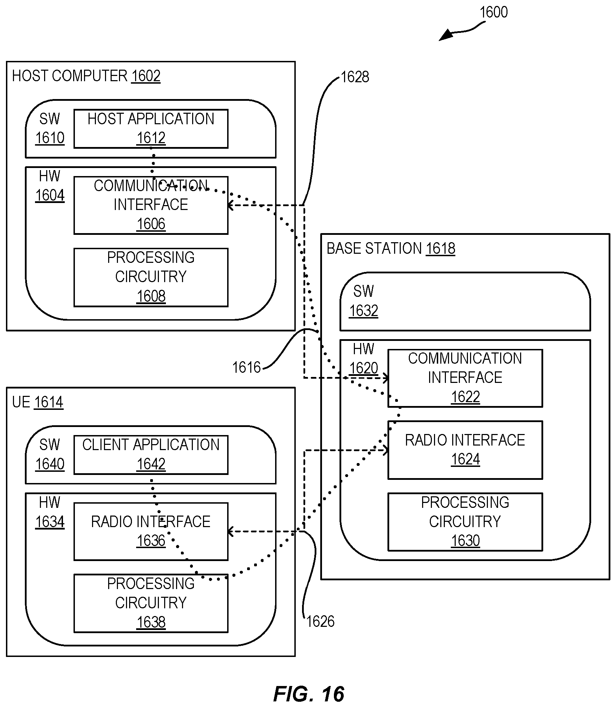

Example implementations, in accordance with an embodiment, of the UE, base station, and host computer discussed in the preceding paragraphs will now be described with reference to Figure 16. In a communication system 1600, a host computer 1602 comprises hardware 1604 including a communication interface 1606 configured to set up and maintain a wired or wireless connection with an interface of a different communication device of the communication system 1600. The host computer 1602 further comprises processing circuitry 1608, which may have storage and/or processing capabilities. In particular, the processing circuitry 1608 may comprise one or more programmable processors, ASICs, FPGAs, or combinations of these (not shown) adapted to execute instructions. The host computer 1602 further comprises software 1610, which is stored in or accessible by the host computer 1602 and executable by the processing circuitry 1608. The software 1610 includes a host application 1612. The host application 1612 may be operable to provide a service to a remote user, such as a UE 1614 connecting via an OTT connection 1616 terminating at the UE 1614 and the host computer 1602. In providing the service to the remote user, the host application 1612 may provide user data which is transmitted using the OTT connection 1616.

The communication system 1600 further includes a base station 1618 provided in a telecommunication system and comprising hardware 1620 enabling it to communicate with the host computer 1602 and with the UE 1614. The hardware 1620 may include a communication interface 1622 for setting up and maintaining a wired or wireless connection with an interface of a different communication device of the communication system 1600, as well as a radio interface 1624 for setting up and maintaining at least a wireless connection 1626 with the UE 1614 located in a coverage area (not shown in Figure 16) served by the base station 1618. The communication interface 1622 may be configured to facilitate a connection 1628 to the host computer 1602. The connection 1628 may be direct or it may pass through a core network (not shown in Figure 16) of the telecommunication system and/or through one or more intermediate networks outside the telecommunication system. In the embodiment shown, the hardware 1620 of the base station 1618 further includes processing circuitry 1630, which may comprise one or more programmable processors, ASICs, FPGAs, or combinations of these (not shown) adapted to execute instructions. The base station 1618 further has software 1632 stored internally or accessible via an external connection.

The communication system 1600 further includes the UE 1614 already referred to. The UE's 1614 hardware 1634 may include a radio interface 1636 configured to set up and maintain a wireless connection 1626 with a base station serving a coverage area in which the UE 1614 is currently located. The hardware 1634 of the UE 1614 further includes processing circuitry 1638, which may comprise one or more programmable processors, ASICs, FPGAs, or combinations of these (not shown) adapted to execute instructions. The UE 1614 further comprises software 1640, which is stored in or accessible by the UE 1614 and executable by the processing circuitry 1638. The software 1640 includes a client application 1642. The client application 1642 may be operable to provide a service to a human or non-human user via the UE 1614, with the support of the host computer 1602. In the host computer 1602, the executing host application 1612 may communicate with the executing client application 1642 via the OTT connection 1616 terminating at the UE 1614 and the host computer 1602. In providing the service to the user, the client application 1642 may receive request data from the host application 1612 and provide user data in response to the request data. The OTT connection 1616 may transfer both the request data and the user data. The client application 1642 may interact with the user to generate the user data that it provides.

It is noted that the host computer 1602, the base station 1618, and the UE 1614 illustrated in Figure 16 may be similar or identical to the host computer 1516, one of the base stations 1506A, 1506B, 1506C, and one of the UEs 1512, 1514 of Figure 15, respectively. This is to say, the inner workings of these entities may be as shown in Figure 16 and independently, the surrounding network topology may be that of Figure 15.

In Figure 16, the OTT connection 1616 has been drawn abstractly to illustrate the communication between the host computer 1602 and the UE 1614 via the base station 1618 without explicit reference to any intermediary devices and the precise routing of messages via these devices. The network infrastructure may determine the routing, which may be configured to hide from the UE 1614 or from the service provider operating the host computer 1602, or both. While the OTT connection 1616 is active, the network infrastructure may further take decisions by which it dynamically changes the routing (e.g., on the basis of load balancing consideration or reconfiguration of the network).

The wireless connection 1626 between the UE 1614 and the base station 1618 is in accordance with the teachings of the embodiments described throughout this disclosure. One or more of the various embodiments improve the performance of OTT services provided to the UE 1614 using the OTT connection 1616, in which the wireless connection 1626 forms the last segment.

A measurement procedure may be provided for the purpose of monitoring data rate, latency, and other factors on which the one or more embodiments improve. There may further be an optional network functionality for reconfiguring the OTT connection 1616 between the host computer 1602 and the UE 1614, in response to variations in the measurement results. The measurement procedure and/or the network functionality for reconfiguring the OTT connection 1616 may be implemented in the software 1610 and the hardware 1604 of the host computer 1602 or in the software 1640 and the hardware 1634 of the UE 1614, or both. In some embodiments, sensors (not shown) may be deployed in or in association with communication devices through which the OTT connection 1616 passes; the sensors may participate in the measurement procedure by supplying values of the monitored quantities exemplified above, or supplying values of other physical quantities from which the software 1610, 1640 may compute or estimate the monitored quantities. The reconfiguring of the OTT connection 1616 may include message format, retransmission settings, preferred routing, etc.; the reconfiguring need not affect the base station 1618, and it may be unknown or imperceptible to the base station 1618. Such procedures and functionalities may be known and practiced in the art. In certain embodiments, measurements may involve proprietary UE signaling facilitating the host computer 1602's measurements of throughput, propagation times, latency, and the like. The measurements may be implemented in that the software 1610 and 1640 causes messages to be transmitted, in particular empty or 'dummy' messages, using the OTT connection 1616 while it monitors propagation times, errors, etc.

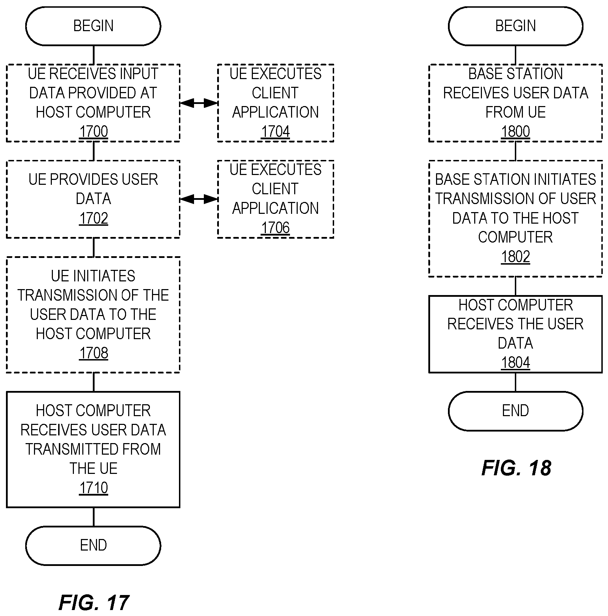

Figure 17 is a flowchart illustrating a method implemented in a communication system, in accordance with one embodiment. The communication system includes a host computer, a base station, and a UE which may be those described with reference to Figures 15 and 16. For simplicity of the present disclosure, only drawing references to Figure 17 will be included in this section. In step 1700 (which may be optional), the UE receives input data provided by the host computer. Additionally or alternatively, in step 1702, the UE provides user data. In sub-step 1704 (which may be optional) of step 1700, the UE provides the user data by executing a client application. In sub-step 1706 (which may be optional) of step 1702, the UE executes a client application which provides the user data in reaction to the received input data provided by the host computer. In providing the user data, the executed client application may further consider user input received from the user. Regardless of the specific manner in which the user data was provided, the UE initiates, in sub-step 1708 (which may be optional), transmission of the user data to the host computer. In step 1710 of the method, the host computer receives the user data transmitted from the UE, in accordance with the teachings of the embodiments described throughout this disclosure.

Figure 18 is a flowchart illustrating a method implemented in a communication system, in accordance with one embodiment. The communication system includes a host computer, a base station, and a UE which may be those described with reference to Figures 15 and 16. For simplicity of the present disclosure, only drawing references to Figure 18 will be included in this section. In step 1800 (which may be optional), in accordance with the teachings of the embodiments described throughout this disclosure, the base station receives user data from the UE. In step 1802 (which may be optional), the base station initiates transmission of the received user data to the host computer. In step 1804 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

**Claims**

1. A method performed by a wireless communication device (712), the method comprising:

   determining (800) whether uplink transmit switching from a first carrier to a second carrier is needed for an uplink transmission;
   obtaining (802, 804) a value for a Physical Uplink Shared Channel, PUSCH, processing time, the value being a first value if uplink transmit switching is not needed and being a second value if uplink transmit switching is needed; and
   performing (806) the uplink transmission, one or more actions related to the uplink transmission, or both the uplink transmission and the one or more actions related to the uplink transmission, based on the obtained value for the PUSCH processing time
   wherein the one or more actions related to the uplink transmission comprise uplink transmit switching between a first carrier and a second carrier,
   wherein the uplink transmission is performed if the obtained value for the PUSCH processing time is the first value,
   wherein the one or more actions related to the uplink transmission, or both the uplink transmission and the one or more actions related to the uplink transmission, are performed if the obtained value for the PUSCH processing time is the second value.

2. The method of claim 1, wherein the PUSCH processing time is a function of a PUSCH preparation time, $N_2$.

3. The method of claim 2, wherein the value for the uplink transmission related parameter is a value for the PUSCH processing time, and obtaining (802, 804) the value for the uplink transmission related timing parameter comprises obtaining the value for the PUSCH processing time based on a first value of a PUSCH preparation time $N_2$ if uplink switch is not needed and based on a second value of the PUSCH preparation time $N_2$ if uplink switching is needed.

4. The method of claim 3, wherein (i) the second value of the PUSCH preparation time $N_2$ is a function of: (a) the first value of the PUSCH preparation time $N_2$, (b) a switching gap, (c) a numerology of the first carrier, (d) a numerology of the second carrier, or (e) any combination of two or more of (a)-(d), (ii) wherein the first value of the PUSCH preparation time $N_2$ is expressed as a number of time-domain symbols, and the second value of the PUSCH preparation time $N_2$ is the first value of the PUSCH preparation time $N_2$ plus one time-domain symbol, or (iii) wherein the second value of the PUSCH preparation time $N_2$ is equal to the first value of the PUSCH preparation time $N_2$ plus ceiling(switching_gap/symbol_duration), where "switching_gap" is a length of a switching gap and "symbol_duration" is a duration of a time-domain symbol for a numerology of the second carrier.

5. The method of any of claims 1 to 4, wherein (i) the PUSCH processing time is $T_{proc,2}$, $T_{proc,CSI}$, $T_{proc,release}^{mux}$, $T_{proc,2}^{mux}$, or $T_{proc,CSI}^{mux}$, (ii) wherein the uplink transmission is:

   a Physical Uplink Shared Channel, PUSCH, transmission;
   a PUSCH transmission with Uplink Control Information, UCI;
   an aperiodic Sounding Reference Signal, SRS, transmission;
   a Physical Random Access Channel, PRACH, transmission; or
   a Physical Uplink Control Channel, PUCCH, transmission, and/or
   (iii) wherein the second value is a function of: (a) the first value, (b) a switching gap, (c) a numerology of the first carrier, (d) a numerology of the second carrier, or (e) any combination of two or more of (a)-(d).

6. The method of claim 1, wherein the first value is expressed as a number of time-domain symbols, and the second value is the first value plus one time-domain symbol or wherein the second value is equal to the first value plus ceiling(switching_gap/symbol_duration), where "switching_gap" is a length of a switching gap configured or scheduled by the network and "symbol_duration" is a duration of a time-domain symbol for a numerology of the second carrier.

7. A wireless communication device (712) adapted to perform the method of any of claims 1 to 6.

8. The wireless communication device (712; 1300) of claim 7 wherein the processing circuity (1702) is further configured to cause the wireless communication device (712; 1300) to perform the method of any of claims 2 to 6.

**9.** A method performed by a base station (702), the method comprising:

determining (900) whether uplink transmit switching from a first carrier to a second carrier is needed for an uplink transmission from a particular wireless communication device (712);

obtaining (902, 904) a value for a Physical Uplink Shared Channel, PUSCH, processing time for the particular wireless communication device (712), the value being a first value if uplink transmit switching is not needed and being a second value if uplink transmit switching is needed; and

scheduling (906) the uplink transmission from the particular wireless communication device (712) based on the obtained value for PUSCH processing time,

wherein the one or more actions related to the uplink transmission comprise uplink transmit switching between a first carrier and a second carrier,

wherein the uplink transmission is performed if the obtained value for the PUSCH processing time is the first value,

wherein the one or more actions related to the uplink transmission, or both the uplink transmission and the one or more actions related to the uplink transmission, are performed if the obtained value for the PUSCH processing time is the second value.

**10.** The method of claim 9, wherein (i) the PUSCH processing time is a function of a PUSCH preparation time, $N_2$, (ii) wherein the PUSCH processing time is $T_{proc,2}$, $T_{proc,CSI}$, $T_{proc,release}^{mux}$, $T_{proc,2}^{mux}$, or $T_{proc,CSI}^{mux}$, and/or (iii) wherein the uplink transmission is:

a Physical Uplink Shared Channel, PUSCH, transmission;.
a PUSCH transmission with Uplink Control Information, UCI;
an aperiodic Sounding Reference Signal, SRS, transmission;
a Physical Random Access Channel, PRACH, transmission; or
a Physical Uplink Control Channel, PUCCH, transmission.

**11.** The method of claim 9, wherein (i) the second value is a function of: (a) the first value, (b) a switching gap, (c) a numerology of the first carrier, (d) a numerology of the second carrier, or (e) any combination of two or more of (a)-(d), (ii) wherein the first value is expressed as a number of time-domain symbols, and the second value is the first value plus one time-domain symbol, or (iii) wherein the second value is equal to the first value plus ceiling(switching_gap/symbol_duration), where "switching_gap" is a length of a switching gap (e.g., configured or scheduled by the network) and "symbol_duration" is a duration of a time-domain symbol for a numerology of the second carrier.

**12.** A base station (702) adapted to perform the method of any of claims 9 to 11.


**Patentansprüche**

**1.** Verfahren, das von einer drahtlosen Kommunikationsvorrichtung (712) durchgeführt wird, wobei das Verfahren Folgendes umfasst:

Bestimmen (800), ob Uplink-Sendeumschaltung von einem ersten Träger auf einen zweiten Träger für eine Uplink-Übertragung erforderlich ist;

Erhalten (802, 804) eines Wertes für eine Physical Uplink Shared Channel-Verarbeitungszeit, PUSCH-Verarbeitungszeit, wobei der Wert ein erster Wert ist, falls keine Uplink-Sendeumschaltung erforderlich ist, und ein zweiter Wert ist, falls Uplink-Sendeumschaltung erforderlich ist; und

Durchführen (806) der Uplink-Übertragung, einer oder mehrerer mit der Uplink-Übertragung in Beziehung stehender Aktionen oder sowohl der Uplink-Übertragung als auch der einen oder der mehreren mit der Uplink-Übertragung in Beziehung stehenden Aktionen basierend auf dem erhaltenen Wert für die PUSCH-Verarbeitungszeit,

wobei die eine oder die mehreren mit der Uplink-Übertragung in Beziehung stehenden Aktionen Uplink-Sendeumschaltung zwischen einem ersten Träger und einem zweiten Träger umfassen,

wobei die Uplink-Übertragung durchgeführt wird, falls der erhaltene Wert der PUSCH-Verarbeitungszeit der erste Wert ist,

wobei die eine oder die mehreren mit der Uplink-Übertragung in Beziehung stehenden Aktionen oder sowohl die Uplink-Übertragung als auch die eine oder die mehreren mit der Uplink-Übertragung in Beziehung stehenden Aktionen durchgeführt werden, falls der erhaltene Wert für die PUSCH-Verarbeitungszeit der zweite Wert ist,

2. Verfahren nach Anspruch 1, wobei die PUSCH-Verarbeitungszeit eine Funktion einer PUSCH-Vorbereitungszeit $N_2$ ist.

3. Verfahren nach Anspruch 2, wobei der Wert für den Uplink-Übertragungs-bezogenen Parameter ein Wert für die PUSCH-Verarbeitungszeit ist und das Erhalten (802, 804) des Wertes für den Uplink-Übertragungs-bezogenen Zeitparameter Erhalten des Wertes für die PUSCH-Verarbeitungszeit basierend auf einem ersten Wert einer PUSCH-Vorbereitungszeit $N_2$ umfasst, falls keine Uplink-Umschaltung erforderlich ist, und basierend auf einem zweiten Wert der PUSCH-Vorbereitungszeit $N_2$ umfasst, falls Uplink-Umschaltung erforderlich ist.

4. Verfahren nach Anspruch 3, wobei (i) der zweite Wert der PUSCH-Vorbereitungszeit $N_2$ eine Funktion von Folgendem ist: (a) dem ersten Wert der PUSCH-Vorbereitungszeit $N_2$, (b) einer Umschaltlücke, (c) einer Numerologie des ersten Trägers, (d) einer Numerologie des zweiten Trägers oder (e) einer beliebigen Kombination von zwei oder mehr von (a)-(d), (ii) wobei der erste Wert der PUSCH-Vorbereitungszeit $N_2$ als eine Anzahl von Zeitdomänensymbolen ausgedrückt wird und der zweite Wert der PUSCH-Vorbereitungszeit $N_2$ der erste Wert der PUSCH-Vorbereitungszeit $N_2$ plus einem Zeitdomänensymbol ist, oder (iii) wobei der zweite Wert der PUSCH-Vorbereitungszeit $N_2$ gleich dem ersten Wert der PUSCH-Vorbereitungszeit $N_2$ plus ceiling(switching_gap/symbol_duration) ist, wobei "switching_gap" eine Länge einer Umschaltlücke ist und "symbol_duration" eine Dauer eines Zeitdomänensymbols für eine Numerologie des zweiten Trägers ist.

5. Verfahren nach einem der Ansprüche 1 bis 4, wobei (i) die PUSCH-Vorbereitungszeit $T_{proc,2}$, $T_{proc,CSI}$, $T_{proc,release}^{mux}$, $T_{proc,2}^{mux}$ oder $T_{proc,CSI}^{mux}$ ist, (ii) wobei die Uplink-Übertragung Folgendes ist:

   eine Physical Uplink Control Channel-Übertragung, PUCCH-Übertragung, und/oder
   eine PUSCH-Übertragung mit Uplink-Steuerinformationen, UCI;
   eine periodische Übertragung eines Sondierungsregerenzsignals, SRS;
   eine Physical Random Access Channel, PRACH-Übertragung, PRACH-Übertragung; oder
   eine Physical Uplink Control Channel-Übertragung, PUCCH-Übertragung, und/oder
   (iii) wobei der zweite Wert eine Funktion von Folgendem ist: (a) dem ersten Wert, (b) einer Umschaltlücke, (c) einer Numerologie des ersten Trägers, (d) einer Numerologie des zweiten Trägers oder (e) einer beliebigen Kombination von zwei oder mehr von (a)-(d).

6. Verfahren nach Anspruch 1, wobei der erste Wert als eine Anzahl von Zeitdomänensymbolen ausgedrückt wird und der zweite Wert der erste Wert plus einem Zeitdomänensymbol ist oder wobei der zweite Wert gleich dem ersten Wert plus ceiling(switching_gap/symbol_duration) ist, wobei "switching_gap" eine Länge einer vom Netzwerk konfigurierten oder disponierten Umschaltlücke ist und "symbol_duration" eine Dauer eines Zeitdomänensymbols für eine Numerologie des zweiten Trägers ist.

7. Drahtlose Kommunikationsvorrichtung (712), die zum Durchführen des Verfahrens nach einem der Ansprüche 1 bis 6 ausgelegt ist.

8. Drahtlose Vorrichtung (712; 1300) nach Anspruch 7, wobei die Verarbeitungsschaltungsanordnung (1702) ferner so konfiguriert ist, dass sie die drahtlose Vorrichtung (712; 1300) zum Durchführen des Verfahrens nach einem der Ansprüche 2 bis 6 veranlasst.

9. Verfahren, das von einer Basisstation (702) durchgeführt wird, wobei das Verfahren Folgendes umfasst:

   Bestimmen (900), ob Uplink-Sendeumschaltung von einem ersten Träger auf einen zweiten Träger für eine Uplink-Übertragung von einer spezifischen drahtlosen Kommunikationsvorrichtung (712) erforderlich ist;
   Erhalten (902, 904) eines Wertes für eine Physical Uplink Shared Channel-Verarbeitungszeit, PUSCH-Verarbeitungszeit, für die spezifische drahtlose Kommunikationsvorrichtung (712), wobei der Wert ein erster Wert ist, falls keine Uplink-Sendeumschaltung erforderlich ist, und ein zweiter Wert ist, falls Uplink-Sendeumschaltung erforderlich ist; und
   Disponieren (906) der Uplink-Übertragung von der spezifischen drahtlosen Kommunikationsvorrichtung (712) basierend auf dem erhaltenen Wert der PUSCH-Verarbeitungszeit,
   wobei die eine oder die mehreren mit der Uplink-Übertragung in Beziehung stehenden Aktionen Uplink-Sendeumschaltung zwischen einem ersten Träger und einem zweiten Träger umfassen,

wobei die Uplink-Übertragung durchgeführt wird, falls der erhaltene Wert der PUSCH-Verarbeitungszeit der erste Wert ist,

wobei die eine oder die mehreren mit der Uplink-Übertragung in Beziehung stehenden Aktionen oder sowohl die Uplink-Übertragung als auch die eine oder die mehreren mit der Uplink-Übertragung in Beziehung stehenden Aktionen durchgeführt werden, falls der erhaltene Wert für die PUSCH-Verarbeitungszeit der zweite Wert ist.

10. Verfahren nach Anspruch 9, wobei (i) die PUSCH-Verarbeitungszeit eine Funktion einer PUSCH-Vorbereitungszeit $N_2$ ist, (ii) wobei die PUSCH-Vorbereitungszeit $T_{proc,2}$, $T_{proc,CSI}$, $T^{mux}_{proc,release}$, $T^{mux}_{proc,2}$ oder $T^{mux}_{proc,CSI}$ ist, (iii) wobei die Uplink-Übertragung Folgendes ist:

eine Physical Uplink Shared Channel-Übertragung, PUSCH-Übertragung;
eine PUSCH-Übertragung mit Uplink-Steuerinformationen, UCI;
eine periodische Übertragung eines Sondierungsregerenzsignals, SRS;
eine Physical Random Access Channel, PRACH-Übertragung, PRACH-Übertragung; oder
eine Physical Uplink Control Channel-Übertragung, PUCCH-Übertragung.

11. Verfahren nach Anspruch 9, wobei (i) der zweite Wert eine Funktion von Folgendem ist: (a) dem ersten Wert, (b) einer Umschaltlücke, (c) einer Numerologie des ersten Trägers, (d) einer Numerologie des zweiten Trägers oder (e) einer beliebigen Kombination von zwei oder mehr von (a)-(d), (ii) wobei der erste Wert als eine Anzahl von Zeitdomänensymbolen ausgedrückt wird und der zweite Wert der erste Wert plus einem Zeitdomänensymbol ist, oder (iii) wobei der zweite Wert gleich dem ersten Wert plus ceiling(switching_gap/symbol_duration) ist, wobei "switching_gap" eine Länge einer Umschaltlücke (z. B. vom Netzwerk konfiguriert oder disponiert) ist und "symbol_duration" eine Dauer eines Zeitdomänensymbols für eine Numerologie des zweiten Trägers ist.

12. Basisstation (702), die zum Durchführen des Verfahrens nach einem der Ansprüche 9 bis 11 ausgelegt ist.

**Revendications**

1. Procédé réalisé par un dispositif de communication sans fil (712), le procédé comprenant :

la détermination (800) si une commutation de transmission de liaison montante d'une première porteuse à une deuxième porteuse est nécessaire pour une transmission de liaison montante ;
l'obtention (802, 804) d'une valeur pour un temps de traitement de canal partagé de liaison montante physique, PUSCH, la valeur étant une première valeur si une commutation de transmission de liaison montante n'est pas nécessaire et étant une deuxième valeur si une commutation de transmission de liaison montante est nécessaire ; et
la réalisation (806) de la transmission de liaison montante, d'une ou plusieurs actions liées à la transmission de liaison montante, ou à la fois de la transmission de liaison montante et des une ou plusieurs actions liées à la transmission de liaison montante, sur la base de la valeur obtenue pour le temps de traitement de PUSCH,
dans lequel les une ou plusieurs actions liées à la transmission de liaison montante comprennent une commutation de transmission de liaison montante entre une première porteuse et une deuxième porteuse,
dans lequel la transmission de liaison montante est réalisée si la valeur obtenue pour le temps de traitement de PUSCH est la première valeur,
dans lequel les une ou plusieurs actions liées à la transmission de liaison montante, ou à la fois la transmission de liaison montante et les une ou plusieurs actions liées à la transmission de liaison montante sont réalisées si la valeur obtenue pour le temps de traitement de PUSCH est la deuxième valeur.

2. Procédé selon la revendication 1, dans lequel le temps de traitement de PUSCH est une fonction d'un temps de préparation de PUSCH, $N_2$.

3. Procédé selon la revendication 2, dans lequel la valeur pour le paramètre lié à la transmission de liaison montante est une valeur pour le temps de traitement de PUSCH, et l'obtention (802, 804) de la valeur pour le paramètre de temporisation lié à la transmission de liaison montante comprend l'obtention de la valeur pour le temps de traitement de PUSCH sur la base d'une première valeur d'un temps de préparation de PUSCH $N_2$ si une commutation de liaison montante n'est pas nécessaire et sur la base d'une deuxième valeur du temps de traitement de PUSCH $N_2$ si une

commutation de liaison montante est nécessaire.

4. Procédé selon la revendication 3, dans lequel (i) la deuxième valeur du temps de préparation de PUSCH $N_2$ est une fonction de : (a) la première valeur du temps de préparation de PUSCH $N_2$, (b) un espace de commutation, (c) une numérologie de la première porteuse, (d) une numérologie de la deuxième porteuse ou (e) toute combinaison de deux ou plus de (a) à (d), (ii) dans lequel la première valeur du temps de préparation de PUSCH $N_2$ est exprimée en tant qu'un nombre de symboles dans le domaine temporel, et la deuxième valeur du temps de préparation de PUSCH $N_2$ est la première valeur du temps de préparation de PUSCH $N_2$ plus un symbole dans le domaine temporel, ou (iii) dans lequel la deuxième valeur du temps de préparation de PUSCH $N_2$ est égale à la première valeur du temps de préparation de PUSCH $N_2$ plus partie_fractionnaire (espace_commutation/durée_symbole), où « espace commutation » est une longueur d'un espace de commutation et « durée_symbole » est une durée d'un symbole dans le domaine temporel pour une numérologie de la deuxième porteuse.

5. Procédé selon l'une quelconque des revendications 1 à 4, dans lequel (i) le temps de traitement de PUSCH est $T_{proc,2}$, $T_{proc,CSI}$, $T_{proc,release}^{mux}$, $T_{proc,2}^{mux}$, ou $T_{proc,CSI}^{mux}$, (ii) dans lequel la transmission de liaison montante est :

   une transmission de canal partagé de liaison montante physique, PUSCH ;
   une transmission de PUSCH avec des informations de commande de liaison montante, UCI ;
   une transmission de signal de référence de sondage, SRS, apériodique ;
   une transmission de canal d'accès aléatoire physique, PRACH ; ou
   une transmission de canal de commande de liaison montante physique, PUCCH, et/ou
   (iii) dans lequel la deuxième valeur est une fonction de : (a) la première valeur, (b) un espace de commutation, (c) une numérologie de la première porteuse, (d) une numérologie de la deuxième porteuse, ou (e) toute combinaison de deux ou plus de (a) à (d).

6. Procédé selon la revendication 1, dans lequel la première valeur est exprimée en tant qu'un nombre de symboles dans le domaine temporel, et la deuxième valeur est la première valeur plus un symbole dans le domaine temporel ou dans lequel la deuxième valeur est égale à la première valeur plus partie_fractionnaire(espace_commutation/durée_symbole), où « espace_commutation » est une longueur d'un espace de commutation (configuré ou planifié par le réseau) et « durée_symbole » est une durée d'un symbole dans le domaine temporel pour une numérologie de la deuxième porteuse.

7. Dispositif de communication sans fil (712) adapté pour réaliser le procédé selon l'une quelconque des revendications 1 à 6.

8. Dispositif de communication sans fil (712 ; 1300) selon la revendication 7, dans lequel la circuiterie de traitement (1702) est en outre configurée pour amener le dispositif de communication sans fil (712 ; 1300) à réaliser le procédé selon l'une quelconque des revendications 2 à 6.

9. Procédé réalisé par une station de base (702), le procédé comprenant :

   la détermination (900) si une commutation de transmission de liaison montante d'une première porteuse à une deuxième porteuse est nécessaire pour une transmission de liaison montante à partir d'un dispositif de communication sans fil (712) particulier ;
   l'obtention (902, 904) d'une valeur pour un temps de traitement de canal partagé de liaison montante physique, PUSCH, pour le dispositif de communication sans fil (712) particulier, la valeur étant une première valeur si une commutation de transmission de liaison montante n'est pas nécessaire et étant une deuxième valeur si une commutation de transmission de liaison montante est nécessaire ; et
   la planification (906) de la transmission de liaison montante à partir du dispositif de communication sans fil (712) particulier sur la base de la valeur obtenue pour le temps de traitement de PUSCH,
   dans lequel les une ou plusieurs actions liées à la transmission de liaison montante comprennent une commutation de transmission de liaison montante entre une première porteuse et une deuxième porteuse,
   dans lequel la transmission de liaison montante est réalisée si la valeur obtenue pour le temps de traitement de PUSCH est la première valeur,
   dans lequel les une ou plusieurs actions liées à la transmission de liaison montante, ou à la fois la transmission de liaison montante et les une ou plusieurs actions liées à la transmission de liaison montante sont réalisées si la valeur obtenue pour le temps de traitement de PUSCH est la deuxième valeur.

10. Procédé selon la revendication 9, dans lequel (i) le temps de traitement de PUSCH est une fonction d'un temps de préparation de PUSCH, $N_2$, (ii) dans lequel le temps de traitement de PUSCH est $T_{proc,2}$, $T_{proc,CSI}$, $T_{proc,release}^{mux}$, $T_{proc,2}^{mux}$, ou $T_{proc,CSI}^{mux}$, et/ou (iii) dans lequel la transmission de liaison montante est :

une transmission de canal partagé de liaison montante physique, PUSCH ;
une transmission de PUSCH avec des informations de commande de liaison montante, UCI ;
une transmission de signal de référence de sondage, SRS, apériodique ;
une transmission de canal d'accès aléatoire physique, PRACH ; ou
une transmission de canal de commande de liaison montante physique, PUCCH.

11. Procédé selon la revendication 9, dans lequel (i) la deuxième valeur est une fonction de : (a) la première valeur, (b) un espace de commutation, (c) une numérologie de la première porteuse, (d) une numérologie de la deuxième porteuse, ou (e) toute combinaison de deux ou plus de (a) à (d), (ii) dans lequel la première valeur est exprimée en tant qu'un nombre de symboles dans le domaine temporel, et la deuxième valeur est la première valeur plus un symbole dans le domaine temporel, ou (iii) dans lequel la deuxième valeur est égale à la première valeur plus partie_fractionnaire(espace_commutation/durée_symbole), où « espace_commutation » est une longueur d'un espace de commutation (par exemple, configuré ou planifié par le réseau) et « durée_symbole » est une durée d'un symbole dans le domaine temporel pour une numérologie de la deuxième porteuse.

12. Station de base (702) adaptée pour réaliser le procédé selon l'une quelconque des revendications 9 à 11.

Δf = 15 kHz

ONE RESOURCE ELEMENT

ONE OFDM SYMBOL
INCLUDING CYCLIC PREFIX

*FIG. 1*

| Case 1 | 1 Tx on carrier 1 and 1 Tx on carrier 2 |
|--------|------------------------------------------|
| Case 2 | 0 Tx on carrier 1 and 2 Tx on carrier 2 |

*FIG. 2*

*FIG. 3*

*FIG. 4*

FIG. 5

*FIG. 6*

FIG. 7

```
                    ┌─────────┐
                    │  START  │
                    └─────────┘
                         │
                         ▼
                        ╱╲
           NO         ╱    ╲        YES
      ┌─────────────╱ UL Tx ╲─────────────┐
      │           ╱SWITCHING? ╲           │
      │           ╲   800    ╱            │
      │             ╲      ╱              │
      │               ╲  ╱                │
      │                ╲╱                 │
      ▼                                   ▼
┌──────────────────────┐      ┌──────────────────────┐
│ OBTAIN A FIRST VALUE │      │ OBTAIN A SECOND VALUE│
│ FOR THE UL           │      │ FOR THE UL           │
│ TRANSMISSION RELATED │      │ TRANSMISSION RELATED │
│ TIMING PARAMETER     │      │ TIMING PARAMETER     │
│ 802                  │      │ 804                  │
└──────────────────────┘      └──────────────────────┘
      │                                   │
      └───────────────┬───────────────────┘
                      ▼
┌─────────────────────────────────────────────────────┐
│ PERFORM THE SCHEDULED PUSCH TRANSMISSION AND/OR ONE  │
│ OR MORE RELATED OPERATIONS BASED ON THE OBTAINED     │
│ (FIRST OR SECOND) VALUE FOR THE UL TRANSMISSION      │
│ RELATED TIMING PARAMETER                             │
│ 806                                                  │
└─────────────────────────────────────────────────────┘
```

*FIG. 8*

START

NO — UL Tx SWITCHING? 900 — YES

OBTAIN A FIRST VALUE FOR THE UL TRANSMISSION RELATED TIMING PARAMETER 902

OBTAIN A SECOND VALUE FOR THE UL TRANSMISSION RELATED TIMING PARAMETER 904

SCHEDULE UL TRANSMISSION TO THE WD BASED ON THE OBTAINED (FIRST OR SECOND) VALUE FOR THE UL TRANSMISSION RELATED TIMING PARAMETER 906

*FIG. 9*

1000

1016

CONTROL SYSTEM
1002

NETWORK
INTERFACE
1008

PROCESSOR(S)
1004

MEMORY
1006

RADIO UNIT(S)
1010

TX(S) 1012

RX(S) 1014

1016

*FIG. 10*

RADIO ACCESS NODE
1000

MODULE(S)
1200

*FIG. 12*

FIG. 11

1300

1312

TRANSCEIVER(S)
1306

1312

MEMORY
1304

PROCESSOR(S)
1302

TX(S) 1308

RX(S) 1310

*FIG. 13*

UE
1300

MODULE(S)
1400

*FIG. 14*

**FIG. 15**

1600

HOST COMPUTER 1602

SW
1610 | HOST APPLICATION
1612

HW
1604 | COMMUNICATION
INTERFACE
1606

PROCESSING
CIRCUITRY
1608

1628

1616

BASE STATION 1618

SW
1632

HW
1620 | COMMUNICATION
INTERFACE
1622

RADIO INTERFACE
1624

PROCESSING
CIRCUITRY
1630

UE 1614

SW
1640 | CLIENT APPLICATION
1642

HW
1634 | RADIO INTERFACE
1636

PROCESSING
CIRCUITRY
1638

1626

FIG. 16

BEGIN

UE RECEIVES INPUT
DATA PROVIDED AT
HOST COMPUTER
1700

UE EXECUTES
CLIENT
APPLICATION
1704

UE PROVIDES USER
DATA
1702

UE EXECUTES
CLIENT
APPLICATION
1706

UE INITIATES
TRANSMISSION OF THE
USER DATA TO THE
HOST COMPUTER
1708

HOST COMPUTER
RECEIVES USER DATA
TRANSMITTED FROM
THE UE
1710

END

FIG. 17

BEGIN

BASE STATION
RECEIVES USER DATA
FROM UE
1800

BASE STATION INITIATES
TRANSMISSION OF USER
DATA TO THE HOST
COMPUTER
1802

HOST COMPUTER
RECEIVES THE USER
DATA
1804

END

FIG. 18

**EP 4 133 669 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 63008310 A
- WO 2014111161 A
- CN 110234136

**Non-patent literature cited in the description**

- 100e-5.1 LS-TxSwitching-03] Email discussion/approval on remaining issues on inter-band UL CA. *R1-2001275*, February 2020